(19) Europäisches Patentamt
European Patent Office
Office européen des brevets

(11) EP 1 429 541 A2

(12) **EUROPEAN PATENT APPLICATION**

(43) Date of publication:
**16.06.2004 Bulletin 2004/25**

(51) Int Cl.[7]: **H04N 3/36**, H04N 5/253, H04N 9/11

(21) Application number: **03027866.7**

(22) Date of filing: **04.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **11.12.2002 JP 2002359306**

(71) Applicant: **KONICA MINOLTA HOLDINGS, INC.**
**Tokyo 100-0005 (JP)**

(72) Inventors:
- **Nakajima, Takeshi**
  **Hino-shi Tokyo, 191-8511 (JP)**
- **Ito, Tsukasa**
  **Hino-shi Tokyo, 191-8511 (JP)**
- **Hattori, Tsuyoshi, 2970 Ishikawa-machi**
  **Hachioji-shi Tokyo, 192-8505 (JP)**
- **Nomura, Shoichi, 2970 Ishikawa-machi**
  **Hachioji-shi Tokyo, 192-8505 (JP)**
- **Ikeda, Chizuko**
  **Hino-shi Tokyo, 191-8511 (JP)**

(74) Representative: **Henkel, Feiler & Hänzel**
**Möhlstrasse 37**
**81675 München (DE)**

(54) **Method and apparatus for processing image data**

(57) There is described an image-processing apparatus, which makes it possible to clearly and accurately recognize the image defect caused by the defect of the recording medium. The apparatus processes image signals acquired by scanning an image, recorded on a recording medium, with an image reading light. The apparatus includes a defect-detecting signal generating section to scan the image with a defect detecting light, so as to generate defect detecting signals, which can be employed for detecting a defect of the image; a converting section to apply a multiple-resolution conversion processing to the defect detecting signals, generated by the defect-detecting signal generating section, so as to decompose the defect detecting signals into multiple-resolution signal components; and a recognizing section to recognize a presence or absence of the defect in the image, based on the multiple-resolution signal components decomposed by the converting section. The multiple-resolution conversion could be the Dyadic Wavelet transform.

EP 1 429 541 A2

## Description

## BACKGROUND OF THE INVENTION

The present invention relates to image-processing apparatus, image-processing method, image-processing program and image-recording apparatus.

Recently, when developing a photographic image or producing additional prints of the photographic image, there has been conducted such a processing that an image formed on either a color photographic film or a photographic printing paper are converted to a plurality of image signals by transmitting or reflecting three primary colors of R, G, B through/from the image, and by photoelectrically reading the image with the CCD (Charge Coupled Device) sensor, etc.

After having been subjected to various types of image processing represented by negative/positive reversal, brightness adjustment, color balance adjustment, removal of granular noise and enhancement of sharpness, such image signals are distributed through such media as a CD-R, floppy (R) disk and memory card or via the Internet, and are outputted as hard copy images on silver halide photographic paper by an inkjet printer, thermal printer or the like. Alternatively, such image signals are displayed on the medium such as CRT, liquid crystal display or plasma display to be viewed.

Incidentally, when the negative or positive photographic films, photographic prints, etc. are roughly handled or stored under a bad condition, sometimes scars are formed on the surface of them, or various kinds of dirt, such as dusts, fingerprints, etc., are adhered to them. Such the defects of the recording medium refract and/or absorb the image reading light, and therefore, influence the image signals so as to cause image defects of the reproduced image.

Such the defects of the recording medium impede the transmission of the infrared radiation light, while the other parts of the recording medium permit the transmission of the infrared radiation light regardless of the presence or absence of a colored area. By employing this phenomenon, image signals of a pixel corresponding to the defect of the recording medium have been compensated for, based on the infrared image signals acquired by scanning the recording medium with the infrared radiation light apart from the image reading light (for instance, set forth in Patent Document 1).

Patent Document 1: Tokkaihei 6-28468 (JP2559970)

However, since the infrared image signals include noises generated at the time of photoelectronic converting operation with the CCD sensor, or amplifying operation of the signals, it has been impossible to detect a defect having weak signal intensity by employing the method in which the presence or absence of the defect is determined by comparing the infrared image signals (energy intensity of the infrared radiation light) with a threshold value, as the abovementioned conventional method set forth in Patent Document 1. In other words, when intensity changes of the infrared image signals between a defective part and its peripheral area are small, as in such a case that a dirt dimly and widely appears like a fingerprint, a case of a weak scar, etc., it has been impossible to obtain a S/N ratio sufficient for detecting the defect of the recording medium. Accordingly, there has been a fear that such the defect weakly distributed over the wide area cannot be clearly recognized. Instead of employing the infrared radiation light, even when an ultraviolet light or a visible light having a wavelength different from that of the image reading light is employed for the abovementioned purpose, there also has been a fear that the image defect having weak intensity changes with its peripheral area cannot be clearly recognized, as well as the above.

## SUMMARY OF THE INVENTION

To overcome the abovementioned drawbacks in conventional image-recording apparatus, it is an object of the present invention to provide an image-processing method, an image-processing apparatus, an image-processing program and an image-recording apparatus, each of which makes it possible to clearly and accurately recognize the image defect caused by the defect of the recording medium.

Accordingly, to overcome the cited shortcomings, the abovementioned object of the present invention can be attained by image-processing methods, image-processing apparatus, image-processing programs and image-recording apparatus described as follow.

(1) An apparatus for processing image signals acquired by scanning an image, recorded on a recording medium, with an image reading light, the apparatus comprising: a defect-detecting signal generating section to scan the image with a defect detecting light other than the image reading light, so as to generate defect detecting signals, which can be employed for detecting a defect of the image; a converting section to apply a multiple-resolution conversion processing to the defect detecting signals, generated by the defect-detecting signal generating section, so as to decompose the defect detecting signals into multiple-resolution signal components; and a recognizing section to recognize a presence or absence of the defect in the image, based on the multiple-resolution signal components decomposed by the converting section.

(2) The apparatus of item 1, wherein the multiple-resolution conversion processing is a Dyadic Wavelet transform, and the multiple-resolution signal components include at least a high frequency band component.
(3) The apparatus of item 2, wherein the converting section applies the Dyadic Wavelet transform of at least two levels to the defect detecting signals; and wherein the recognizing section recognizes the presence or absence of the defect in the image by comparing signal intensities of high frequency band components corresponding to at least two levels with respect to a specific pixel, among high frequency band components of every level acquired by applying the Dyadic Wavelet transform.
(4) The apparatus of item 1, further comprising: a compensating section to compensate for the defect of the image recognized by the recognizing section.
(5) A method for processing image signals acquired by scanning an image, recorded on a recording medium, with an image reading light, the method comprising the steps of:

scanning the image with a defect detecting light other than the image reading light, so as to generate defect detecting signals, which can be employed for detecting a defect of the image; applying a multiple-resolution conversion processing to the defect detecting signals, generated in the scanning step, so as to decompose the defect detecting signals into multiple-resolution signal components; and recognizing a presence or absence of the defect in the image, based on the multiple-resolution signal components decomposed in the applying step.

(6) The method of item 5, wherein the multiple-resolution conversion processing is a Dyadic Wavelet transform, and the multiple-resolution signal components include at least a high frequency band component.
(7) The method of item 6, wherein the Dyadic Wavelet transform of at least two levels is applied to the defect detecting signals in the applying step; and wherein, in the recognizing step, the presence or absence of the defect in the image is recognized by comparing signal intensities of high frequency band components corresponding to at least two levels with respect to a specific pixel, among high frequency band components of every level acquired by applying the Dyadic Wavelet transform.
(8) The method of item 5, further comprising the step of:

compensating for the defect of the image, recognized in the recognizing step.

(9) A computer program for executing operations for processing image signals acquired by scanning an image, recorded on a recording medium, with an image reading light, the computer program comprising the functional steps of:

scanning the image with a defect detecting light other than the image reading light, so as to generate defect detecting signals, which can be employed for detecting a defect of the image; applying a multiple-resolution conversion processing to the defect detecting signals, generated in the scanning step, so as to decompose the defect detecting signals into multiple-resolution signal components; and recognizing a presence or absence of the defect in the image, based on the multiple-resolution signal components decomposed in the applying step.

(10) The computer program of item 9, wherein the multiple-resolution conversion processing is a Dyadic Wavelet transform, and the multiple-resolution signal components include at least a high frequency band component.
(11) The computer program of item 10, wherein the Dyadic Wavelet transform of at least two levels is applied to the defect detecting signals in the applying step; and wherein, in the recognizing step, the presence or absence of the defect in the image is recognized by comparing signal intensities of high frequency band components corresponding to at least two levels with respect to a specific pixel, among high frequency band components of every level acquired by applying the Dyadic Wavelet transform.
(12) The computer program of item 9, further comprising the functional step of: compensating for the defect of the image, recognized in the recognizing step.
(13) An apparatus for outputting a reproduced image, comprising: an image-processing section to process image signals acquired by scanning an image, recorded on a recording medium, with an image reading light; and an image-recording section to record the reproduced image onto a outputting medium, based on processed image signals acquired by processing the image signals in the image-processing section; wherein the image-processing section includes: a defect-detecting signal generating section to scan the image with a defect detecting light other than the image reading light, so as to generate defect detecting signals, which can be employed for detecting a defect of the image; a converting section to apply a multiple-resolution conversion processing to the defect detecting signals, generated by the defect-detecting signal generating section, so as to decompose the defect detecting signals into multiple-resolution signal components; and a recognizing section to recognize a presence or absence of the defect in the image, based on the multiple-resolution signal components decomposed by the converting section.

(14) The apparatus of item 13, wherein the multiple-resolution conversion processing is a Dyadic Wavelet transform, and the multiple-resolution signal components include at least a high frequency band component.

(15) The apparatus of item 14, wherein the converting section applies the Dyadic Wavelet transform of at least two levels to the defect detecting signals; and wherein the recognizing section recognizes the presence or absence of the defect in the image by comparing signal intensities of high frequency band components corresponding to at least two levels with respect to a specific pixel, among high frequency band components of every level acquired by applying the Dyadic Wavelet transform.

(16) The apparatus of item 13, wherein the image-processing section further includes: a compensating section to compensate for the defect of the image recognized by the recognizing section.

Further, to overcome the abovementioned problems, other image-processing methods, other image-processing apparatus, other image-processing programs and other image-recording apparatus, embodied in the present invention, will be described as follow:

(17) An image-processing apparatus, characterized in that,

in the image-processing apparatus, which conducts an image-processing, based on image signals acquired by scanning an image, recorded on a recording medium, with an image reading light, there are provided:

a defect detecting section to detect a defect of the image by scanning the image, recorded on the recording medium, with a defect detecting light, and to output its defect detecting signals;
a converting section to conduct a multiple-resolution conversion for the defect detecting signals;
a discriminating section to conduct a discrimination of the defect of the image, based on the multiple-resolution converted signals.

(18) An image-processing method, characterized in that,

in the image-processing method for conducting an image-processing, based on image signals acquired by scanning an image, recorded on a recording medium, with an image reading light, there are included:

a defect detecting process for detecting a defect of the image by scanning the image, recorded on the recording medium, with a defect detecting light, and for outputting its defect detecting signals;
a converting process for conducting a multiple-resolution conversion for the defect detecting signals;
a discriminating process for conducting a discrimination of the defect of the image, based on the multiple-resolution converted signals.

(19) An image-processing program, in a computer for conducting an image processing, based on image signals acquired by scanning an image, recorded on a recording medium, with an image reading light, realizing the functions of:

a defect detecting function for detecting a defect of the image by scanning the image, recorded on the recording medium, with a defect detecting light, and for outputting its defect detecting signals;
a converting function for conducting a multiple-resolution conversion for the defect detecting signals;
a discriminating function for conducting a discrimination of the defect of the image, based on the multiple-resolution converted signals.

(20) An image-recording apparatus, characterized in that,

in the image-recording apparatus, which is provided with an image-processing section conducting an image-processing, based on image signals acquired by scanning an image, recorded on a recording medium, with an image reading light, and image-recording section recording an image on an outputting medium by outputting the image signal to which the image processing is applied, there are provided:

a defect detecting section to detect a defect of the image by scanning the image, recorded on the recording medium, with a defect detecting light, and to output its defect detecting signals;
a converting section to conduct a multiple-resolution conversion for the defect detecting signals;
a discriminating section to conduct a discrimination of the defect of the image, based on the multiple-resolution converted signals.

According to the invention described in anyone of items 1, 5, 9, 13 and 17-20, since the image defect is recognized, based on the signals of the multiple-resolution signal components generated from the defect detecting signals, it becomes possible to appropriately recognize a position, characteristics etc. of the defect on the image, even if signal intensity changes between defected area and its peripheral areas on the recording medium are small and the S/N ratio is low.

(21) The image-processing apparatus, described in item 17, characterized in that, the multiple-resolution conversion is a Dyadic Wavelet transform.

(22) The image-processing method, described in item 18, characterized in that, the multiple-resolution conversion is a Dyadic Wavelet transform.

(23) The image-processing program, described in item 19, characterized in that, the multiple-resolution conversion is a Dyadic Wavelet transform.

(24) The image-recording apparatus, described in item 20, characterized in that, the multiple-resolution conversion is a Dyadic Wavelet transform.

According to the invention described in anyone of items 2, 6, 10, 14 and 21-24, since the Dyadic Wavelet transform is employed for the multiple-resolution conversion of the defect detecting signals, it becomes possible to recognize the defect in more detail than ever without down-sampling the defective image formed from the defect detecting signals.

(25) The image-processing apparatus, described in item 21, characterized in that

the converting section conduct the Dyadic Wavelet transform of equal to or more than two levels for the defect detecting signal, and

in high frequency band components of each level acquired by the Dyadic Wavelet transform, the discriminating section discriminates the defect of the image by comparing signal intensities of corresponding pixel of at least two levels.

(26) The image-processing method, described in item 22, characterized in that,

in the converting process, the Dyadic Wavelet transform of equal to or more than two levels is conducted for the defect detecting signal, and

in high frequency band components of each level acquired by the Dyadic Wavelet transform, the defect of the image by comparing signal intensities of corresponding pixel of at least two levels is discriminated in the discriminating process.

(27) The image-processing program, described in item 23, characterized in that,

when realizing the converting function, the Dyadic Wavelet transform of equal to or more than two levels is conducted for the defect detecting signal, and

when realizing the discriminating function, in high frequency band components of each level acquired by the Dyadic Wavelet transform, the defect of the image by comparing signal intensities of corresponding pixel of at least two levels is discriminated.

(28) The image-recording apparatus, described in item 24, characterized in that

the converting section conduct the Dyadic Wavelet transform of equal to or more than two levels for the defect detecting signal, and

in high frequency band components of each level acquired by the Dyadic Wavelet transform, the discriminating section discriminates the defect of the image by comparing signal intensities of corresponding pixel of at least two levels.

According to the invention described in anyone of items 3, 7, 11, 15 and 25-28, since the defect of the image is recognized by comparing high frequency band components, corresponding to at least two levels, for instance, level 1 and level 2, in respect to a specific pixel, with each other, after the Dyadic Wavelet transform of at least two levels is applied to the defect detecting signals, it becomes possible to detect even such the defect detecting signal whose S/N ratio is very low (for instance, very dim fingerprints), which cannot be detected by the Dyadic Wavelet transform of level 1, by increasing the level number of the Dyadic Wavelet transform to raise the signal intensity, resulting in a recognition of the image defect more accurate than ever.

(29) The image-processing apparatus, described in anyone of items 17, 21 and 25, characterized in that the defect of the image discriminated by the discriminating section is compensated for.

(30) The image-processing method, described in anyone of items 18, 22 and 26, characterized in that the defect of the image discriminated by the discriminating section is compensated for.

(31) The image-processing program, described in anyone of items 19, 23 and 27, characterized in that the defect of the image discriminated by the discriminating section is compensated for.

(32) The image-recording apparatus, described in anyone of items 20, 24 and 28, characterized in that the defect of the image discriminated by the discriminating section is compensated for.

According to the invention described in anyone of items 4, 8, 12, 16 and 29-32, since the image defect, recognized in detail by applying the multiple-resolution conversion processing to the defect detecting signal, is compensated for, it becomes possible to output a fine image onto various kinds of recording mediums without forming any image defect.

BRIEF DESCRIPTION OF THE DRAWINGS

Other objects and advantages of the present invention will become apparent upon reading the following detailed description and upon reference to the drawings in which:

Fig. 1 shows wavelet functions employed for the multiple-resolution conversion processing of the defect detecting signals pertaining to the present invention;
Fig. 2 shows a block diagram representing a method for calculating an orthogonal wavelet conversion or a bi-orthogonal wavelet conversion of level 1 by means of filter processing;
Fig. 3 shows a block diagram representing a method for calculating an orthogonal wavelet conversion or a bi-orthogonal wavelet conversion of level 1 in two-dimensional signals by means of filter processing;
Fig. 4 shows a schematic diagram representing a process of decomposing input signals by means of the wavelet transform of level 1, level 2 and level 3;
Fig. 5 shows a block diagram representing a method for reconstructing input signals "$S_{n-1}$", decomposed by an orthogonal wavelet conversion or a bi-orthogonal wavelet conversion, by applying a wavelet inverse-transform by means of filter processing;
Fig. 6 shows exemplified waveforms of input signal "$S_0$" and high frequency band components, each acquired by the Dyadic Wavelet transform of each level;
Fig. 7 shows a block diagram representing a method for calculating the Dyadic Wavelet transform of level 1 by means of filter processing;
Fig. 8 shows a block diagram representing a method for calculating the Dyadic Wavelet transform of level 1 in two-dimensional signals by means of filter processing;
Fig. 9 shows a block diagram representing a method for calculating the Dyadic Wavelet transform of level 3 in two-dimensional signals by means of filter processing;
Fig. 10 shows an exemplified outlook configuration of an image-recording apparatus embodied in the present invention;
Fig. 11 shows a block diagram representing a functional configuration of an image-recording apparatus shown in Fig. 10;
Fig. 12 shows a block diagram representing a functional configuration of an image-processing section shown in Fig. 11;
Fig. 13 shows a block diagram representing a method for calculating by means of filter processing when applying a bi-orthogonal wavelet conversion of level 1 in embodiment 1;
Fig. 14 shows a block diagram representing a method for calculating by means of filter processing when applying the Dyadic Wavelet transform of level 1 in embodiment 2; and
Fig. 15 shows a block diagram representing a method for calculating by means of filter processing when applying the Dyadic Wavelet transform of level 3 in embodiment 3.

DETAILED DESCRIPTION OF THE PREFERRED EMBODIMENT

Referring to the drawings, an embodiment of the present invention will be detailed in the following.

The present invention relates to an image-processing apparatus, an image-processing method, an image-processing program and an image-recording apparatus, each of which detect an image defect caused by a defect of the recording medium by employing the defect detecting light, and then, recognize the image defect by applying the multiple resolution conversion to the defect image signals, in order to compensate for the image defect, when the image reading light scans an image recorded on one of various recording mediums, including negative or positive photographic films, silver-halide photographic films, etc., to acquire the image signals of the image.

Incidentally, the "image reading light" is defined as a light irradiated onto the image so as to read the image recorded on the recording medium by means of a photoelectronic converting element, such as the CCD sensor, etc. Generally speaking, the visible lights of three primary colors of R (Red), G (Green), B (Blue) are employed for reading a color image.

When employing the visible lights of R, G, B as the image reading light, the image signals are acquired for every color component. The image is divided into a lot of small areas, and the image signals represent color and brightness of every one of the small areas in form of electronic signal intensities. Hereinafter, each of the small areas mentioned above is defined as a "pixel".

The "defect of the recording medium" indicates scars formed on the surface of the recording medium and various kinds of dirt, such as dusts, fingerprints, etc. Such the defects of the recording medium refract and/or absorb the image reading light, and therefore, influence the image signals so as to cause the image defects of the reproduced image.

The "defect detecting light" is defined as a light for detecting the image defect caused by the defect of the recording medium, and, for instance, the infrared radiation light can be employed as the defect detecting light. The defects of the recording medium impede the transmission of the infrared radiation light, while the other parts of the recording medium permit the transmission of the infrared radiation light regardless of the presence or absence of a colored area. By employing this phenomenon, it becomes possible to acquire the defects of the recording medium, namely, the defect detection signals only representing the extracted image defects (refer to Patent Document 1). Incidentally, the defect detecting light employed in the present invention is not limited to the infrared radiation light, but any kind of light can be employed for this purpose as far as the light is capable of detecting the image defect. For instance, a visible light having a wavelength, being different from those of the ultraviolet light or the image reading light, would be also applicable for this purpose.

The defect detection signals represent intensities of electronic signals acquired by applying the photoelectronic converting operation to an amount of the infrared light transmitted or reflected through/from the recording medium for every pixel.

The multiple resolution conversion is a generic name of the methods represented by the wavelet conversion, the full-restructuring filter bank, the Laplacian pyramid, etc. In this method, one converting operation allows the inputted signals to be resolved into high-frequency component signals and low-frequency component signals, and then, a same kind of converting operation is further applied to the acquired low-frequency component signals, in order to obtain the multiple resolution signals including a plurality of signals locating in frequency bands being different relative to each other. The multiple resolution signals can be restructured to the original signals by applying the multiple resolution inverse-conversion to the multiple resolution signals. The detailed explanations of such the methods are set forth in, for instance, "Wavelet and Filter banks" by G. Strang & T. Nguyen, Wellesley-Cambridge Press.

In the present invention, the image defects are recognized on the basis of the multiple resolution signals acquired by applying the multiple resolution conversion to the defect detection signals. Now, the term of "to recognize the image defect" is to determine the presence or absence of the image defect. It is more desirable that the location of the pixel having the image defect and the characteristics of the image defect are also determined from the intensities and frequencies of the image defect signals or the multiple converted signals.

Incidentally, although the multiple resolution conversion of the image signals is not specifically described in the embodiment of the present invention, it is also applicable that, when conducting a compensating operation for the image defect and other image-processing operations, the multiple resolution conversion is applied to the image signals, and then, the operations are applied to the acquired signals.

Next, among the methods of the multiple resolution conversion, the wavelet transform will be detailed in the following.

The wavelet transform is operated as follows: In the first place, the following wavelet function shown in equation (1), where vibration is observed in a finite range as shown in Fig. 1, is used to obtain the wavelet transform coefficient $\langle f, \psi_{a,b} \rangle$ with respect to input signal f(x) by employing equation (2). Through this process, input signal is converted into the sum total of the wavelet function shown in equation (3).

[Eq. 1]

$$\psi_{a,b}(x) = \psi\left(\frac{x-b}{a}\right) \qquad (1)$$

[Eq. 2]

$$\left\langle f, \psi_{a,b} \right\rangle \equiv \frac{1}{a} \int f(x) \cdot \psi\left(\frac{x-b}{a}\right) dx \qquad (2)$$

[Eq. 3]

$$f(x) = \sum_{a,b} \left\langle f, \psi_{a,b} \right\rangle \cdot \psi_{a,b}(x) \qquad (3)$$

In the above equation, "a" denotes the scale of the wavelet function, and "b" the position of the wavelet function. As shown in Fig. 1, as the value "a" is greater, the frequency of the wavelet function $\psi_{a,b}(x)$ is smaller. The position where the wavelet function $\psi_{a,b}(x)$ vibrates moves according to the value of position "b". Thus, equation (3) signifies that the input signal f(x) is decomposed into the sum total of the wavelet function $\psi_{a,b}(x)$ having various scales and positions.

A great number of the wavelet functions are known, that allow the above-mentioned conversion. In the field of image processing, there have been specifically well known the orthogonal wavelet conversion and the bi-orthogonal wavelet conversion, which make it possible to conduct calculations at a high-speed rate. Further, the Dyadic Wavelet transform is more desirable, compared to the orthogonal wavelet conversion or the bi-orthogonal wavelet conversion, since it is possible for the Dyadic Wavelet transform to recognize the image defect more accurately based on the defect detecting signals after the converting operation.

Next, the orthogonal wavelet conversion and the bi-orthogonal wavelet conversion will be detailed in the following. In the orthogonal wavelet conversion and the bi-orthogonal wavelet conversion, the wavelet function defined by equation (4) shown in the following is employed.

[Eq. 4]

$$\psi_{i,j}(x) = 2^{-i}\, \psi\left(\frac{x - j \cdot 2^{i}}{2^{i}}\right) \qquad (4)$$

where "i" denotes a natural number.

Comparison between equation (4) and equation (1) shows that the value of scale "a" is defined discretely by an i-th power of "2", in the orthogonal wavelet conversion and the bi-orthogonal wavelet conversion. This value "i" is called a level.

In practical terms, level "i" is restricted up to finite upper limit N, and input signal is converted as shown in equation (5), equation (6) and equation (7).

[Eq. 5]

$$f(x) \equiv S_0 = \sum_{j} \left\langle S_0, \psi_{1,j} \right\rangle \cdot \psi_{1,j}(x) + \sum_{j} \left\langle S_0, \phi_{1,j} \right\rangle \cdot \phi_{1,j}(x)$$

$$\equiv \sum_{j} W_1(j) \cdot \psi_{1,j}(x) + \sum_{j} S_1(j) \cdot \phi_{1,j}(x) \qquad (5)$$

$$S_{i-1} = \sum_{j} \left\langle S_{i-1}, \psi_{i,j} \right\rangle \cdot \psi_{i,j}(x) + \sum_{j} \left\langle S_{i-1}, \phi_{i,j} \right\rangle \cdot \phi_{i,j}(x)$$

$$\equiv \sum_{j} W_i(j) \cdot \psi_{i,j}(x) + \sum_{j} S_i(j) \cdot \phi_{i,j}(x) \qquad (6)$$

$$f(x) \equiv S_0 = \sum_{i=1}^{N} \sum_{j} W_i(j) \cdot \psi_{i,j}(x) + \sum_{j} S_N(j) \cdot \phi_{i,j}(x) \quad (7)$$

The second term of equation (5) denotes that the low frequency band component of the residue that cannot be represented by the sum total of wavelet function $\psi_{1,j}(x)$ of level 1 is represented in terms of the sum total of scaling function $\phi_{1,j}(x)$. An adequate scaling function in response to the wavelet function is employed (refer to the aforementioned reference). This means that input signal $f(x) \equiv S_0$ is decomposed into the high frequency band component $W_1$ and low frequency band component $S_i$ of level 1 by the wavelet transform of level 1 shown in equation (5).

Incidentally, in the image signals, the high frequency band component represents fine structures, namely, sharply changing structures, in the image, for instance, like hears and lashes, while the low frequency band component represents coarse structures, namely, moderately changing structures, in the image, like cheeks.

Since the minimum traveling unit of the wavelet function $\psi_{i,j}(x)$ is $2^i$, each of the signal volume of high frequency band component $W_1$ and low frequency band component $S_1$ with respect to the signal volume of input signal "$S_0$" is 1/2. The sum total of the signal volumes of high frequency band component $W_1$ and low frequency band component $S_1$ is equal to the signal volume of input signal "$S_0$". The low frequency band component $S_1$, obtained by the wavelet transform of level 1, is decomposed into high frequency band component $W_2$ and low frequency band component $S_2$ of level 2 by equation (6). After that, transform is repeated up to level N, whereby input signal "$S_0$" is decomposed into the sum total of the high frequency band components of levels 1 through N and the sum of the low frequency band components of level N, as shown in equation (7).

It has been well known that the wavelet transform of level 1, shown in equation (6), can be computed by the filtering process, which employs low-pass filter LPF and high-pass filter HPF as shown in Fig. 2 (refer to "Wavelet and Filter banks" by G. Strang & T. Nguyen, Wellesley-Cambridge Press).

As shown in Fig. 2, input signal "$S_0$" can be decomposed into the high frequency band component and the low frequency band component, which are obtained by the orthogonal wavelet conversion of level 1 or the bi-orthogonal wavelet conversion of level 1, by processing input signal "$S_0$" with low-pass filter LPF and high-pass filter HPF and by thinning out input signal "$S_0$" at every other samples. Incidentally, in Fig. 2, symbol $2\downarrow$ shows the down sampling where every other samples are removed (thinned out).

The filter coefficients of low-pass filter LPF and high-pass filter HPF to be employed for the processing are appropriately determined corresponding to the wavelet function (refer to the reference document mentioned above).

The wavelet transform of level 1 for the two-dimensional signals, such as the defect detecting signals and the image signals, is conducted in the filtering process as shown in Fig. 3. Initially, the filter processing is applied to input signal $S_{n-1}$ by means of low-pass filter $LPF_x$ and high-pass filter $HPF_x$ in the direction of "x", and then, the down sampling is conducted in the direction of "x". By conducting such the processing, input signal $S_{n-1}$ is decomposed into low frequency band component $SX_n$ and high frequency band component $WX_n$. Further, the filter processing is applied to low frequency band component $SX_n$ and high frequency band component $WX_n$ by means of low-pass filter $LPF_y$ and high-pass filter $HPF_y$ in the direction of "y", and then, the down sampling is conducted in the direction of "y".

According to the filtering process mentioned above, input signal $S_{n-1}$ can be decomposed into three high frequency band components $Wv_n$, $Wh_n$, $Wd_n$ and one low frequency band component $S_n$. Since each of the signal volumes of $Wv_n$, $Wh_n$, $Wd_n$ and $S_n$, generated by a single wavelet transform operation, is 1/2 of that of the input signal $S_{n-1}$ prior to decomposition in both vertical and horizontal directions, the total sum of signal volumes of four components subsequent to decomposition is equal to the signal $S_{n-1}$ prior to decomposition.

Incidentally, the suffix "x", subscripted as $LPF_x$, $HPF_x$ and $2\downarrow_x$ as shown in Fig. 3, indicates the processing in the direction of "x", while the suffix "y", subscripted as $LPF_y$, $HPF_y$ and $2\downarrow_y$ as shown in Fig. 3, indicates the processing in the direction of "y".

Fig. 4 shows the type process of decomposing input signal "$S_0$" by means of the wavelet transform of level 1, level 2 and level 3. As the level number "i" increases, the image signal is further thinned out by the down sampling operation, and the decomposed image is getting small.

It has been well known that, by applying the wavelet inverse transform, which would be conducted in the filtering process, or the like, to $Wv_n$, $Wh_n$, $Wd_n$ and $S_n$ generated by decomposition processing, the signal $S_{n-1}$ prior to decomposition can be fully reconstructed. Incidentally, in Fig. 5, LPF' indicates a low-pass filter for inverse transform, while HPF' indicates a high-pass filter for inverse transform. Further, $2\uparrow$ denotes the up-sampling where zero is inserted into every other signals. Still further, the suffix "x", subscripted as $LPF'_x$, $HPF'_x$ and $2\uparrow_x$, indicates the processing in the direction of "x", while the suffix "y", subscripted as $LPF'_y$, $HPF'_y$ and $2\uparrow_y$, indicates the processing in the direction of "y".

As shown in Fig. 5, low frequency band component $SX_n$ can be obtained by adding a signal, which is acquired by up-sampling $S_n$ in the direction of "y" and processing with low-pass filter $LPF'_y$ in the direction of "y", and another signal, which is acquired by up-sampling $Wh_n$ in the direction of "y" and processing with high-pass filter $HPF'_y$ in the direction of "y", to each other. As well as the above process, $WX_n$ is generated from $Wv_n$ and $Wd_n$.

Further, the signal $S_{n-1}$ prior to decomposition can be reconstructed by adding a signal, which is acquired by up-sampling $SX_n$ in the direction of "x" and processing with low-pass filter $LPF'_x$ in the direction of "x", and another signal, which is acquired by up-sampling $WX_n$ in the direction of "x" and processing with high-pass filter $HPF'_x$ in the direction of "x", to each other.

In case of the orthogonal wavelet conversion, the coefficient of the filter employed for the inverse transforming operation is the same as that of the filter employed for the transforming operation. On the other hand, in case of the bi-orthogonal wavelet conversion, the coefficient of the filter employed for the inverse transforming operation is different from that of the filter employed for the transforming operation (refer to the aforementioned reference document).

Since only the defect detecting signals appear in the high frequency band component of the multiple resolution signals, acquired by applying the multiple resolution conversion processing described in the foregoing to the defect detecting signals, with generating little noises in term of the signal intensity, it becomes possible to accurately recognize the image defect even for the defect detecting signals at a low S/N ratio, such as a dirt dimly and widely appearing like a fingerprint, a weak or slight scar, etc. For instance, a certain threshold value is established against the high frequency band component acquired by applying the multiple resolution conversion processing to the defect detecting signals, and accordingly, it becomes possible to determine a candidate of the image defect when it exceeds the established threshold value. Further, in the multiple resolution conversion processing, since the defect detecting signals can be converted to the frequency domain in a state of having the pixel position, it becomes possible to eliminate the image defect by compensating for the intensity of the image signal in the pixel corresponding to the defect position.

As a next step, the Dyadic Wavelet transform will be detailed in the following. Incidentally, detailed explanations in regard to the Dyadic Wavelet transform are set forth in "Singularity detection and processing with wavelets" by S. Mallat and W. L. Hwang, IEEE Trans. Inform. Theory 38 617 (1992), "Characterization of signal from multiscale edges" by S. Mallet and S. Zhong, IEEE Trans. Pattern Anal. Machine Intel. 14 710 (1992), and "A wavelet tour of signal processing 2ed." by S. Mallat, Academic Press.

The wavelet function employed in the Dyadic Wavelet transform is defined by equation (8) shown below.

[Eq. 8]

$$\psi_{i,j}(x) = 2^{-i}\,\psi\left(\frac{x-j}{2^i}\right) \qquad (8)$$

where "i" denotes a natural number.

The Wavelet functions of the orthogonal wavelet transform and the bi-orthogonal wavelet transform are discretely defined when the minimum traveling unit of the position on level "i" is $2^i$, as described above. By contrast, in the Dyadic Wavelet transform, the minimum traveling unit of the position is kept constant, regardless of level "i".

In other words, in the Dyadic Wavelet transform, since "i" does not appear at the position of the wavelet function indicated by "b" in equation (1), for instance, like $2^i$, the minimum traveling unit of the position is always kept constant, regardless of its level number. Accordingly, unlike the orthogonal wavelet transform and the bi-orthogonal wavelet transform, the down-sampling operation at the time of calculation in the filtering process is not required for the Dyadic Wavelet transform. Due to this difference, the Dyadic Wavelet transform has the following characteristics.

Characteristic 1: The signal volume of each of high frequency band component $W_i$ and low frequency band component $S_i$ generated by the Dyadic Wavelet transform of level 1 shown by equation (9) is the same as that of signal $S_{i-1}$ prior to transform.

[Eq. 9]

$$S_{i-1} = \sum_j \left\langle S_{i-1}, \psi_{i,j} \right\rangle \cdot \psi_{i,j}(x) + \sum_j \left\langle S_{i-1}, \phi_{i,j} \right\rangle \cdot \phi_{i,j}(x)$$

$$\equiv \sum_j W_i(j) \cdot \psi_{i,j}(x) + \sum_j S_i(j) \cdot \phi_{i,j}(x) \qquad (9)$$

Characteristic 2: The scaling function $\phi_{i,j}(x)$ and the wavelet function $\psi_{i,j}(x)$ fulfill the following relationship shown by equation (10).

[Eq. 10]

$$\psi_{i,j}(x) = \frac{\partial}{\partial x}\phi_{i,j}(x) \tag{10}$$

Thus, the high frequency band component $W_i$ generated by the Dyadic Wavelet transform of level 1 represents the first differential (gradient) of the low frequency band component $S_i$.

Characteristic 3: With respect to $W_i \cdot \gamma_i$ (hereinafter referred to as "compensated high frequency band component) obtained by multiplying the coefficient $\gamma_i$ (refer to the aforementioned reference documents in regard to the Dyadic Wavelet transform) determined in response to the level "i" of the Wavelet transform, by high frequency band component, the relationship between levels of the signal intensities of compensated high frequency band components $W_i \cdot \gamma_i$ subsequent to the above-mentioned transform obeys a certain rule, in response to the singularity of the changes of input signals.

Fig. 6 shows exemplified waveforms of: input signal "$S_0$" at line (a); compensated high frequency band component $W_1 \cdot \gamma_1$, acquired by the Dyadic Wavelet transform of level 1, at line (b); compensated high frequency band component $W_2 \cdot \gamma_2$, acquired by the Dyadic Wavelet transform of level 2, at line (c); compensated high frequency band component $W_3 \cdot \gamma_3$, acquired by the Dyadic Wavelet transform of level 3, at line (d); and compensated high frequency band component $W_4 \cdot \gamma_4$, acquired by the Dyadic Wavelet transform of level 4, at line (e).

Observing the changes of the signal intensities step by step, the signal intensity of the compensated high frequency band component $W_i \cdot \gamma_i$, corresponding to a gradual change of the signal intensity shown at "1" and "4" of line (a), increases according as the level number "i" increases, as shown in line (b) through line (e).

With respect to input signal "$S_0$", the signal intensity of the compensated high frequency band component $W_i \cdot \gamma_i$, corresponding to a stepwise signal change shown at "2" of line (a), is kept constant irrespective of the level number "i". Further, with respect to input signal "$S_0$", the signal intensity of the compensated high frequency band component $W_i \cdot \gamma_i$, corresponding to a signal change of δ-function shown at "3" of line (a), decreases according as the level number "i" increases, as shown in line (b) through line (e).

For instance, dirt or the like, dimly and widely appearing on the recording medium, would be represented by the signal having a gradual-sloped waveform and a low intensity as shown at "1" and "4" of line (a) in Fig. 6. Even in this case, the signal intensity can be amplified by increasing the level number in the multiple resolution converting operation for the defect detecting signals, and accordingly, it becomes possible to accurately recognize the image defect.

Further, for instance, although a white noise or a granular noise exhibits the signal change like a δ-function shown at "3" of line (a), the intensity of such the signal change is originally high. Therefore, it is possible to sufficiently recognize such the signal change, even if the signal intensity decreases according as the level number "i" increases.

Characteristic 4: Unlike the above-mentioned method of the orthogonal wavelet transform and the bi-orthogonal wavelet transform, the method of Dyadic Wavelet transform of level 1 in respect to the two-dimensional signals such as the defect detecting signals is followed as shown in Fig. 7.

As shown in Fig. 7, in the Dyadic Wavelet transform of level 1, low frequency band component $S_n$ can be acquired by processing input signal $S_{n-1}$ with low-pass filter $LPF_x$ in the direction of "x" and low-pass filter $LPF_y$ in the direction of "y". Further, a high frequency band component $Wx_n$ can be acquired by processing input signal $S_{n-1}$ with high-pass filter $HPF_x$ in the direction of "x", while another high frequency band component $Wy_n$ can be acquired by processing input signal $S_{n-1}$ with high-pass filter $HPF_y$ in the direction of "y".

The low frequency band component $S_{n-1}$ is decomposed into two high frequency band components $Wx_n$, $Wy_n$ and one low frequency band component $S_n$ by the Dyadic Wavelet transform of level 1. Two high frequency band components correspond to components x and y of the change vector $V_n$ in the two dimensions of the low frequency band component $S_n$. The magnitude $M_n$ of the change vector $V_n$ and angle of deflection $A_n$ are given by equation (11) and equation (12) shown as follow.

[Eq. 11]

$$M_n = \sqrt{Wx_n^2 + Wy_n^2} \tag{11}$$

$$A_n = \text{argument}\ (Wx_n + iWy_n) \tag{12}$$

It has been known that $S_{n-1}$ prior to transform can be reconfigured when the Dyadic Wavelet inverse transform shown in Fig. 8 is applied to two high frequency band components $Wx_n$, $Wy_n$ and one low frequency band component $S_n$. In other words, input signal $S_{n-1}$ prior to transform can be reconstructed by adding the signals of: the signal acquired by processing low frequency band component $S_n$ with low-pass filters $LPF_x$ and $LPF_y$, both used for the forward transform in the directions of "x" and "y"; the signal acquired by processing high frequency band component $Wx_n$ with high-pass filter $HPF'_x$ for inverse transform in the direction of "x" and low-pass filter $LPF'_y$ for inverse transform in the direction of "y"; and the signal acquired by processing high frequency band component $Wy_n$ with low-pass filter $LPF'_x$ for inverse transform in the direction of "x" and high-pass filter $HPF'_y$ for inverse transform in the direction of "y"; together.

As described in the foregoing, according to the Dyadic Wavelet transform, it is possible not only to recognize the image defect even in the defect detecting signals whose S/N ratio is low as well as the orthogonal wavelet transform, the bi-orthogonal wavelet transform, etc., but also to accurately recognize the image defect since the down-sampling operation (thinning out operation) is not required, unlike the orthogonal wavelet transform and the bi-orthogonal wavelet transform. Accordingly, in the high frequency band component acquired by applying the Dyadic Wavelet transform processing to the defect detecting signals, by compensating for the image signal corresponding to the pixel recognized as the image defect, it becomes possible to output the beautiful image onto various kinds of outputting mediums.

Further, by applying the Dyadic Wavelet transforms of at least two levels to the defect detecting signals and by comparing the signal intensities, acquired in respect to every level number, relative to each other, it is desirable in the present invention to determine whether or not a defect detecting signal appearing at a certain pixel position indicates a defect on the image.

Next, the method for applying the Dyadic Wavelet transform processing to defect detecting signal "$S_0$" (serving as input signal "$S_0$") will be detailed in the following.

In the Dyadic Wavelet transform of level 1 for input signal "$S_0$", input signal "$S_0$" is decomposed into two high frequency band components $Wx_1$, $Wy_1$ and low frequency band component $S_1$ by the same filtering process as that shown in Fig. 7. In the Dyadic Wavelet transform of level 2, low frequency band component $S_1$ is further decomposed into two high frequency band components $Wx_2$, $Wy_2$ and low frequency band component $S_2$ by the same filtering process. In the Dyadic Wavelet transform of level 3, low frequency band component $S_2$ is further decomposed into two high frequency band components $Wx_3$, $Wy_3$ and low frequency band component $S_3$ by the same filtering process.

These filtering coefficients are appropriately determined corresponding to the wavelet functions (refer to the aforementioned reference document). Further, in the Dyadic Wavelet transform, the filtering coefficients, employed for every level number, are different relative to each other. The filtering coefficients employed for level "n" are created by inserting $2^{n-1}$-1 zeros into each interval between filtering coefficients for level 1 (refer to the aforementioned reference document).

In the present invention, after applying the Dyadic Wavelet transforms of at least two levels to the defect detecting signal, the pixels corresponding to, for instance, high frequency band components $Wx_1$ and $Wx_2$, $Wy_1$ and $Wy_2$ of at least two levels, such as level 1 and level 2, in the both directions of "x" and "y", are compared with each other, to determine it as a candidate of the image defect when the signal intensity of level 2 is greater than that of level 1 in the both directions of "x" and "y".

Even for the defect detecting signal whose S/N ratio is low (for instance, in case of very dim fingerprint), by increasing the level number, the signal intensity increases, and therefore, it becomes possible to detect it as the image defect and to recognize the image defect more accurately than ever. Specifically for the defect detecting signal whose S/N ratio is low, it is desirable that the high frequency band components of level 1 and level 3 are compared with each other, and it is further desirable that the high frequency band components of level 1, level 2 and level 3 are compared with each other.

As the next step, an image-recording apparatus provided with an image-processing section (image-processing apparatus), which conducts the multiple resolution converting operation for the defect detecting signal in a manner as described in the foregoing, will be detailed in the following. Fig. 10 shows an exemplified outlook configuration of image-recording apparatus 1 embodied in the present invention.

As shown in Fig. 10, image-recording apparatus 1 is provided with magazine loading section 3 mounted on a side of housing body 2, exposure processing section 4 mounted inside housing body 2 and print creating section 5. Further, tray 6 for receiving ejected prints is installed on another side of housing body 2. Still further, CRT 7 (Cathode Ray Tube 7) serving as a display device, film scanning section 8, reflected document input section 9 and operating section 10 are provided on the upper side of housing body 2. Operating section 10 includes inputting means 11 constituted by a touch panel, etc. Still further, image reading section 13 being capable of reading image information stored in various kinds of digital recording mediums including the floppy (Registered Trade Mark) disk, etc. and image writing section 14 being capable of writing (outputting) image signals into various kinds of digital recording mediums including the floppy (Registered Trade Mark) disk, etc. are installed in housing body 2. Still further, as shown in Fig. 11, control section 15 for intensively controlling the abovementioned sections is also installed in housing body 2.

The photosensitive material serving as an image outputting medium is loaded in magazine loading section 3. The photosensitive material is made of, for instance, a silver-halide photosensitive paper including silver-halide photosensitive heat-developing materials. The photosensitive materials having various sizes, such as service size, high-vision size, panorama size, A4-size, visiting card size, etc. can be loaded into magazine loading section 3. Under the command signals sent from control section 15, a conveying means (not shown in the drawings) takes out the photosensitive material having a predetermined size from magazine loading section 3 to convey it to exposure processing section 4.

Exposure processing section 4 exposes the photosensitive material based on the image signals to form a latent image on the photosensitive material. After the exposure processing is completed, the photosensitive material is conveyed to print creating section 5. Corresponding to the size of the photosensitive material, the prints having various kinds of sizes, such as service size prints, high-vision size prints, prints P1 of panorama size, etc., prints P2 of A4-size, prints P3 of visiting card size, etc. are created as shown in Fig. 11.

Print creating section 5 conducts developing and drying operations for the conveyed photosensitive material to create prints. Then, the created prints are ejected onto tray 6.

Incidentally, although image-recording apparatus 1, in which the conveyed photosensitive material is developed and dried to create the prints, is exemplified in Fig. 10, the scope of the present invention is not limited to the above. An apparatus employing any kind of methods, including, for instance, an ink-jetting method, an electro-photographic method, a heat-sensitive method and a sublimation method, is also applicable in the present invention, as far as the apparatus forms an image based on image signals.

CRT 7 displays the processed image, the contents of the operation, etc. according to the command signals sent from control section 15. Incidentally, the scope of the display device is not limited to the CRT, but a liquid-crystal display, a plasma display panel, etc. are also applicable in the present invention.

As shown in Fig. 11, film scanning section 8 reads the image and the defect of transparent recording medium N, such as a negative film, a reversal film, etc., on which an image captured by an analogue camera, etc. is developed, and for this purpose, provided with a film scanner.

The image-reading light source, the defect detecting light source, the scanning means for scanning the image-reading light and the defect detecting light emitted from such the light sources, the light converging means for converging the image-reading light and the defect detecting light penetrated through the recording medium, photoelectronic converting element such as the CCD sensor, etc. constitute the film scanner.

In the film scanner, the image-reading light and the defect detecting light are scanned on transparent recording medium N, and the lights penetrated through transparent recording medium N are converged and focused onto the photoelectronic converting element by means of the light converging means, in order to acquire the image signals and the defect detecting signal as electronic signals photoelectronically converted by the photoelectronic converting element. The acquired image signals and the defect detecting signal are transferred to control section 15.

Reflected document input section 9 reads the image and the defect of non-transparent recording medium P, such as a silver-halide printing paper, a color paper, etc., on which an image captured by an analogue camera, etc. is developed (outputted), and for this purpose, provided with a flat bed scanner.

The image-reading light source, the defect detecting light source, the scanning means, the light converging means, the CCD sensor, etc. constitute the flat bed scanner, as well as film scanning section 8.

In reflected document input section 9, the image-reading light and the defect detecting light are scanned on the recording medium, and the lights reflected from the recording medium are converged and focused onto the CCD sensor by means of the light converging means, in order to acquire the image signals and the defect detecting signal photoelectronically converted by the CCD sensor. The acquired image signals and the defect detecting signal are transferred to control section 15.

In film scanning section 8 and reflected document input section 9, three visible lights of R, G, B are employed as the image-reading lights. Further, in film scanning section 8 and reflected document input section 9, an infrared light is employed as the defect detecting light.

Image reading section 13 inputs frame image information, in regard to images captured by the digital camera, etc., into image-recording apparatus 1 through various kinds of digital storage mediums 16a, 16b.

Image reading section 13 is provided with PC card adaptor 13a, floppy (Registered Trade Mark) disc adaptor 13b to read the frame image information stored in them and to transfer the acquired image information to control section 15. Incidentally, for instance, the PC card reader or the PC card slot is employed as PC card adaptor 13a.

An image-processing is applied to the image signals read and inputted from image reading section 13 as well as the image signals inputted from film scanning section 8 or reflected document input section 9, so that the processed image signals can be outputted onto the photosensitive material, etc.

Further, in image-recording apparatus 1, an image-processing, etc. are applied to the frame image information inputted from film scanning section 8, reflected document input section 9 and image reading section 13, and then, the processed image can be outputted onto not only the photosensitive material or CRT 7, but also various kinds of outputting mediums 17a, 17b, 17c.

Image writing section 14 is provided with a floppy (Registered Trade Mark) disk adaptor 14a, a MO adaptor 14b and an optical disk adaptor 14c. Accordingly, a floppy (Registered Trade Mark) disk 17a, a MO (Magneto-Optics type storage device) disk 17b and an optical disk 17c, etc. can be employed as outputting mediums.

Further, as shown in Fig. 12, control section 15 is provided with communication means 18, which makes it possible to work as a network printer, so to speak, having a function for directly receiving the image signals, representing the captured image, and printing commands from another computer through a communication network, such as LAN, WAN, Internet, etc. It is also possible to transmit the image signals, representing the captured image to which the image processing of the present invention is already applied, and the associated order information to a computer located at a remote site through another computer in the facility concerned and the Internet, etc.

Next, control section 15 will be detailed in the following. Control section 15 is provided with image-processing section 20, in which the multiple resolution conversion processing for the defect detecting signal is performed by a CPU (not shown in the drawings) cooperated with various controlling programs including a defect determining program, an image-processing program, etc., stored in the storage device, such as ROM (not shown in the drawings), etc., so that the signal processing is applied to image signals corresponding to the detected defect pixel to create the output image signals.

As shown in Fig. 12, image-processing section 20 is provided with film scan data processing section 21, reflected document scan data processing section 22, image data format decoding processing section 23, image adjustment processing section 24, CRT-specific processing section 25, first printer-specific processing sections 26, second printer-specific processing sections 27 and image-data format creating section 28.

In film scan data processing section 21, various kinds of processing, such as calibrating operations inherent to film scanning section 8, a negative-to-positive inversion in case of negative document, a gray balance adjustment, a contrast adjustment, etc., are applied to the image signals inputted from film scanning section 8, and then, processed image signals are transmitted to image adjustment processing section 24. A film size and a type of negative/positive, as well as an ISO sensitivity, a manufacturer's name, information on the main subject and information on photographic conditions (for example, information described in APS), optically or magnetically recorded on the film, are also transmitted sent to the image adjustment processing section 24.

In reflected document scan data processing section 22, the calibrating operations inherent to reflected document input section 9, the negative-to-positive inversion in case of negative document, the gray balance adjustment, the contrast adjustment, etc., are applied to the image signals inputted from reflected document input section 9 and then, processed image signals are transmitted to image adjustment processing section 24.

Image data format decoding processing section 23 decodes the image data format of the image signals inputted from image reading section 13 or communication means 18, so as to convert the image signals to a data format suitable for the calculating operations in image adjustment processing section 24 by performing a converting operation of the method for reproducing the compressed code or representing color signals, etc., according to the decoded data format, as needed, and then, transmits converted image signals to image adjustment processing section 24.

Under the command signals sent from operating section 10 or control section 15, image adjustment processing section 24 recognizes the image defect based on multiple resolution signals acquired by applying the multiple resolution conversion processing to the defect detecting signals received from film scanning section 8 or reflected document input section 9 to conduct a processing of compensating for the signal intensity at a pixel corresponding to the image defect of the image signals, and then, transmits the processed image signals to CRT-specific processing section 25, first printer-specific processing sections 26, second printer-specific processing sections 27 and image-data format creating section 28.

Incidentally, when the image information sent from image reading section 13 or communication means 18 include a defect detecting signal, a pixel having the image result is recognized as well, to conduct the image processing of compensating for the signal intensity at the pixel concerned.

CRT-specific processing section 25 applies a pixel number changing processing, a color matching processing, etc. to the compensated image signals received from image adjustment processing section 24, as needed, and then, transmits display signals synthesized with information necessary for displaying, such as control information, etc., to CRT 7.

First printer-specific processing sections 26 applies a calibrating processing inherent to exposure processing section 4, a color matching processing, a pixel number changing processing, etc. to the compensated image signals received from image adjustment processing section 24, as needed, and then, transmits processed image signals to exposure processing section 4.

In case that external printing apparatus 29, such as a large-sized printing apparatus, etc., is coupled to image-recording apparatus 1 embodied in the present invention, a printer-specific processing section, such as second printer-specific processing sections 27 shown in Fig. 12, is provided for every apparatus, so as to conduct an appropriate calibrating processing for each specific printer, a color matching processing, a pixel number change processing, etc.

In image-data format creating section 28, the format of the image signals received from image adjustment processing section 24 are converted to one of various kinds of general-purpose image formats, represented by JPEG (Joint Photographic Coding Experts Group), TIFF (Tagged Image File Format), Exif (Exchangeable Image File Format), etc., as needed, and then, the converted image signals are transmitted to image writing section 14 or communication means 18.

The aforementioned sections, such as film scan data processing section 21, reflected document scan data processing section 22, image data format decoding processing section 23, image adjustment processing section 24, CRT-specific processing section 25, first printer-specific processing sections 26, second printer-specific processing sections 27 and image-data format creating section 28, are eventually established for helping the understandings of the functions of image-processing section 20 embodied in the present invention. Accordingly, it is needless to say that each of these sections is not necessary established as a physically independent device, but is possibly established as a kind of software processing section with respect to a single CPU (Central Processing Unit).

As a next step, with respect to the multiple resolution conversion processing for the defect detecting signals, which is conducted in image adjustment processing section 24 shown in Fig. 12, embodiment 1 - embodiment 3 will be detailed in the following.

[EMBODIMENT 1]

In the embodiment 1, the bi-orthogonal wavelet transform is employed for the multiple resolution conversion processing for the defect detecting signals. Fig. 13 shows a block diagram of the system of embodiment 1 in regard to the bi-orthogonal wavelet transform of the defect detecting signals, performed in image adjustment processing section 24.

The bi-orthogonal wavelet transform of level 1 in respect to the defect detecting signal is calculated by employing the filter processing. Initially, as shown in Fig. 13, the filter processing and the down-sampling processing in the direction of "x" are applied to defect detecting signal "$S_0$" by means of low-pass filter $LPF_x$ and high-pass filter $HPF_x$, to decompose defect detecting signal "$S_0$" into low frequency band component $SX_1$ and high frequency band component $WX_1$.

Successively, the filter processing and the down-sampling processing in the direction of "y" are applied to both low frequency band component $SX_1$ and high frequency band component $WX_1$ by means of low-pass filter $LPF_y$ and high-pass filter $HPF_y$, so as to acquire low frequency band component $S_1$ and three high frequency band components $Wh_1$, $Wv_1$, $Wd_1$.

Incidentally, the filters having the following coefficients (Cohen, Daubechies, Feauveau 5-3) shown in Table 1 are employed in the above.

Table 1

| x | HPF | LPF |
|---|---|---|
| - 2 | | -0.176777 |
| - 1 | 0.353553 | 0.353553 |
| 0 | -0.707107 | 1.06066 |
| 1 | 0.353553 | 0.353553 |
| 2 | | -0.176777 |

Incidentally, in Table 1, the coefficients for x = 0 corresponds to a current pixel currently being processed, the coefficients for x = -1 corresponds to a pixel just before the current pixel, the coefficients for x = 1 corresponds to a pixel just after the current pixel (following as well).

The signal intensities of high frequency band components $Wh_1$, $Wv_1$, $Wd_1$ acquired by the abovementioned filter processing are compared with each other to determine whether or not a certain specific pixel is a candidate of the image defect. When determining that the specific pixel is a candidate of the image defect, the image signal of the specific pixel (in case of three primary colors of R, G, B, the image signal for each of them) is compensated for, based on the image signal intensities of adjacent pixels having no image defect.

According to the embodiment 1, by applying the bi-orthogonal wavelet transform of level 1 to defect detecting signal "$S_0$" and by comparing the signal intensities of the acquired high frequency band components with each other, it was possible to recognize slight scars and/or fingerprints, signal intensity changes of which were relatively small in comparison with those of peripheral areas, as the image defects. Accordingly, it was also possible to appropriately apply the image processing for compensating for the defect, based on the result of recognizing them.

Incidentally, although only the high frequency band components of level 1 are employed for recognizing the defect in the embodiment 1, it is desirable for improving the detecting accuracy that a combination of the high frequency band components of level 1 and those of level 2 is employed for recognizing the defect.

[EMBODIMENT 2]

Next, embodiment 2 will be detailed in the following. In the embodiment 2, the Dyadic Wavelet transform of level 1 is employed for the multiple resolution conversion processing for the defect detecting signals.

Fig. 14 shows a block diagram of the system of embodiment 2 in regard to the multiple resolution conversion processing for the defect detecting signals, performed in image adjustment processing section 24. As shown in Fig. 14, when performing the Dyadic Wavelet transform of level 1, initially, the filter processing is applied to defect detecting signal "$S_0$" by means of high-pass filters $HPF1_x$, $HPF1_y$ and low-pass filters $LPF1_x$, $LPF1_y$ having filter coefficients of level 1 in the direction of "x" and the direction of "y" to decompose defect detecting signal "$S_0$" into two high frequency band components $WX_1$, $WY_1$ and single low frequency band component $S_1$. Incidentally, the filter coefficients employed for each of the filters are shown in Table 2.

Table 2

| x | HPF1 | LPF1 |
|---|---|---|
| -1 | | 0.125 |
| 0 | -2.0 | 0.375 |
| 1 | 2.0 | 0.375 |
| 2 | | 0.125 |

Incidentally, although the Dyadic Wavelet transform of level 1 is performed in the embodiment 2, when performing the Dyadic Wavelet transform at plural levels as in the embodiment 3 detailed later, filter coefficients differing for every level are employed. A coefficient obtained by inserting $2^{n-1}$ -1 zeros between coefficients of filters on level 1 is used as a filter coefficient on level "n" (refer to the aforementioned document).

Each of the compensation coefficients $\gamma_i$ determined in response to the level "i" of the Dyadic Wavelet transform is shown in Table 3.

| i | γ |
|---|---|
| 1 | 0.66666667 |
| 2 | 0.89285714 |
| 3 | 0.97087379 |
| 4 | 0.99009901 |
| 5 | 1 |

The signal intensities of high frequency band components $Wx_1$, $Wy_1$ acquired by the abovementioned filter processing are compared with each other to determine whether or not a certain specific pixel is a candidate of the image defect. When determining that the specific pixel is a candidate of the image defect, the image signal of the specific pixel is compensated for, based on the image signal intensities of adjacent pixels having no image defect.

According to the embodiment 2, it was possible to recognize a slight scar and/or fingerprints, signal intensity changes of which were relatively small in comparison with those of peripheral areas, as an image defect. Further, since the image is not thinned out in the Dyadic Wavelet transform, it was also possible to appropriately apply the image processing for compensating for the defect in a more desirable manner, by compensating for the image signal of the pixel recognized as the image defect by means of the high frequency band components.

Incidentally, although only the high frequency band components, acquired by the Dyadic Wavelet transform of level 1, are employed for recognizing the defect in the embodiment 2, it is desirable for improving the detecting accuracy that a combination of the high frequency band components of level 1 and those of more than level 1 is employed for recognizing the defect.

[EMBODIMENT 3]

Next, embodiment 3 will be detailed in the following. In the embodiment 3, the Dyadic Wavelet transform of level 3 is employed for the multiple resolution conversion processing for the defect detecting signal "$S_0$".

Fig. 15 shows a block diagram of the system of embodiment 3 in regard to the multiple resolution conversion processing for the defect detecting signals, performed in image adjustment processing section 24. As shown in Fig. 15, when performing the process of applying the Dyadic Wavelet transform of level 3 to defect detecting signal "$S_0$", initially, the Dyadic Wavelet transform of level 1 is applied to defect detecting signal "$S_0$" in the same manner as in the embodiment 2 to decompose defect detecting signal "$S_0$" into two high frequency band components $WX_1$, $WY_1$ and single low frequency band component $S_1$.

Then, the Dyadic Wavelet transform is further applied to the acquired low frequency band component $S_1$ in the same manner as the above to decompose it into two high frequency band components $WX_2$, $WY_2$ and low frequency band component $S_2$ in level 2. Still further, the Dyadic Wavelet transform is applied to the acquired low frequency band component $S_2$ in the same manner as the above to decompose it into two high frequency band components $WX_3$, $WY_3$ and low frequency band component $S_3$ in level 3. Incidentally, the compensation coefficients $\gamma_i$ of the filters employed in embodiment 3 are the same as those shown in Table 3.

The signal intensities of high frequency band components $WX_1$, $WY_1$, $WX_2$, $WY_2$, $WX_3$, $WY_3$, acquired as a pair at each level by the abovementioned filter processing, are respectively compared with each other in regard to each of "x" and "y" to determine whether or not a certain specific pixel is a candidate of the image defect in the same method as in the embodiment 2. Further, the pixel, the signal intensity of which increases according as the level of the Dyadic Wavelet transform increases, is additionally determined as a candidate of the image defect. When determining that the specific pixel is a candidate of the image defect, the image signal of the specific pixel (in case of three primary colors of R, G, B, the image signal for each of them) is compensated for, so that the signal intensity of the defected pixel coincides with an average value of the signal intensities of adjacent pixels having no image defect, based on the image signal of the pixels adjacent to the defected pixel.

According to the embodiment 3, it was possible to recognize a slight scar and/or fingerprints, signal intensity changes of which were relatively small in comparison with those of peripheral areas, accurately as the image defects. Accordingly, it was also possible to appropriately apply the image processing for compensating for the defect, based on the result of recognizing them.

According to the present invention, the following effects can be attained.

(1) Since the image defect is recognized, based on the signals of the multiple-resolution signal components generated from the defect detecting signals, it becomes possible to appropriately recognize a position, characteristics etc. of the defect on the image, even if signal intensity changes between defected area and its peripheral areas on the recording medium are small and the S/N ratio is low.

(2) Since the Dyadic Wavelet transform is employed for the multiple-resolution conversion of the defect detecting signals, it becomes possible to recognize the defect in more detail than ever without down-sampling the defective image formed from the defect detecting signals.

(3) Since the defect of the image is recognized by comparing high frequency band components, corresponding to at least two levels, for instance, level 1 and level 2, in respect to a specific pixel, with each other, after the Dyadic Wavelet transform of at least two levels is applied to the defect detecting signals, it becomes possible to detect even such the defect detecting signal whose S/N ratio is very low (for instance, very dim fingerprints), which cannot be detected by the Dyadic Wavelet transform of level 1, by increasing the level number of the Dyadic Wavelet transform to raise the signal intensity, resulting in a recognition of the image defect more accurate than ever.

(4) Since the image defect, recognized in detail by applying the multiple-resolution conversion processing to the defect detecting signal, is compensated for, it becomes possible to output a fine image onto various kinds of recording mediums without forming any image defect.

Disclosed embodiment can be varied by a skilled person without departing from the spirit and scope of the invention.

## Claims

**1.** An apparatus for processing image signals acquired by scanning an image, recorded on a recording medium, with an image reading light, said apparatus comprising:

a defect-detecting signal generating section to scan said image with a defect detecting light, so as to generate defect detecting signals, which can be employed for detecting a defect of said image;

a converting section to apply a multiple-resolution conversion processing to said defect detecting signals, generated by said defect-detecting signal generating section, so as to decompose said defect detecting signals into multiple-resolution signal components; and
a recognizing section to recognize a presence or absence of said defect in said image, based on said multiple-resolution signal components decomposed by said converting section.

**2.** The apparatus of claim 1,
wherein said multiple-resolution conversion processing is a Dyadic Wavelet transform, and said multiple-resolution signal components include at least a high frequency band component.

**3.** The apparatus of claim 2,
wherein said converting section applies said Dyadic Wavelet transform of at least two levels to said defect detecting signals; and
wherein said recognizing section recognizes said presence or absence of said defect in said image by comparing signal intensities of high frequency band components corresponding to at least two levels with respect to a specific pixel, among high frequency band components of every level acquired by applying said Dyadic Wavelet transform.

**4.** The apparatus of claim 1, further comprising:

a compensating section to compensate for said defect of said image recognized by said recognizing section.

**5.** A method for processing image signals acquired by scanning an image, recorded on a recording medium, with an image reading light, said method comprising the steps of:

scanning said image with a defect detecting light, so as to generate defect detecting signals, which can be employed for detecting a defect of said image;
applying a multiple-resolution conversion processing to said defect detecting signals, generated in said scanning step, so as to decompose said defect detecting signals into multiple-resolution signal components; and
recognizing a presence or absence of said defect in said image, based on said multiple-resolution signal components decomposed in said applying step.

**6.** The method of claim 5,
wherein said multiple-resolution conversion processing is a Dyadic Wavelet transform, and said multiple-resolution signal components include at least a high frequency band component.

**7.** The method of claim 6,
wherein said Dyadic Wavelet transform of at least two levels is applied to said defect detecting signals in said applying step; and
wherein, in said recognizing step, said presence or absence of said defect in said image is recognized by comparing signal intensities of high frequency band components corresponding to at least two levels with respect to a specific pixel, among high frequency band components of every level acquired by applying said Dyadic Wavelet transform.

**8.** The method of claim 5, further comprising the step of:

compensating for said defect of said image, recognized in said recognizing step.

**9.** A computer program for executing operations for processing image signals acquired by scanning an image, recorded on a recording medium, with an image reading light, said computer program comprising the functional steps of:

scanning said image with a defect detecting light, so as to generate defect detecting signals, which can be employed for detecting a defect of said image;
applying a multiple-resolution conversion processing to said defect detecting signals, generated in said scanning step, so as to decompose said defect detecting signals into multiple-resolution signal components; and
recognizing a presence or absence of said defect in said image, based on said multiple-resolution signal components decomposed in said applying step.

**10.** The computer program of claim 9,

wherein said multiple-resolution conversion processing is a Dyadic Wavelet transform, and said multiple-resolution signal components include at least a high frequency band component.

**11.** The computer program of claim 10,
wherein said Dyadic Wavelet transform of at least two levels is applied to said defect detecting signals in said applying step; and
wherein, in said recognizing step, said presence or absence of said defect in said image is recognized by comparing signal intensities of high frequency band components corresponding to at least two levels with respect to a specific pixel, among high frequency band components of every level acquired by applying said Dyadic Wavelet transform.

**12.** The computer program of claim 9, further comprising the functional step of:

compensating for said defect of said image, recognized in said recognizing step.

**13.** An apparatus for outputting a reproduced image, comprising:

an image-processing section to process image signals acquired by scanning an image, recorded on a recording medium, with an image reading light; and
an image-recording section to record said reproduced image onto a outputting medium, based on processed image signals acquired by processing said image signals in said image-processing section;

wherein said image-processing section includes:

a defect-detecting signal generating section to scan said image with a defect detecting light, so as to generate defect detecting signals, which can be employed for detecting a defect of said image;
a converting section to apply a multiple-resolution conversion processing to said defect detecting signals, generated by said defect-detecting signal generating section, so as to decompose said defect detecting signals into multiple-resolution signal components; and
a recognizing section to recognize a presence or absence of said defect in said image, based on said multiple-resolution signal components decomposed by said converting section.

**14.** The apparatus of claim 13,
wherein said multiple-resolution conversion processing is a Dyadic Wavelet transform, and said multiple-resolution signal components include at least a high frequency band component.

**15.** The apparatus of claim 14,
wherein said converting section applies said Dyadic Wavelet transform of at least two levels to said defect detecting signals; and
wherein said recognizing section recognizes said presence or absence of said defect in said image by comparing signal intensities of high frequency band components corresponding to at least two levels with respect to a specific pixel, among high frequency band components of every level acquired by applying said Dyadic Wavelet transform.

**16.** The apparatus of claim 13,
wherein said image-processing section further includes:

a compensating section to compensate for said defect of said image recognized by said recognizing section.

FIG. 1

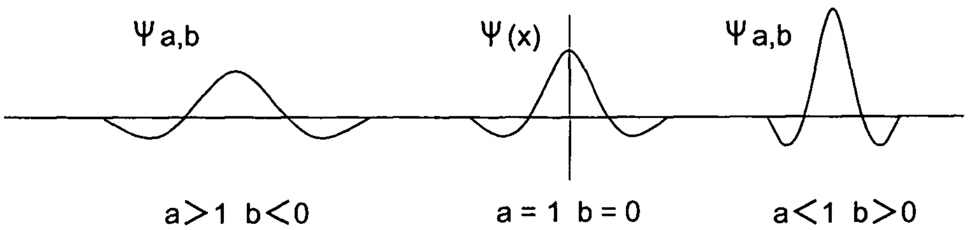

FIG. 2

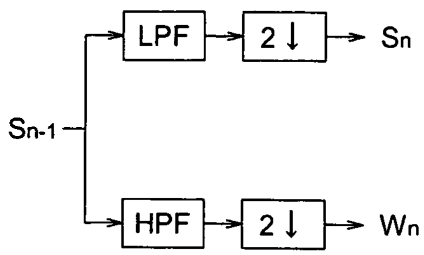
LPF
2↓
Sn
Sn-1
HPF
2↓
Wn

FIG. 3

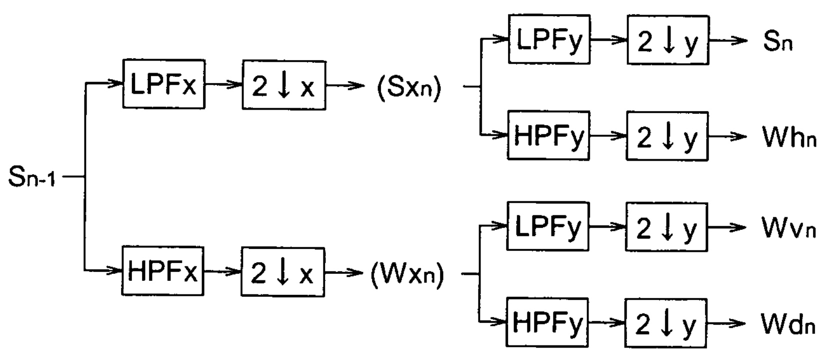
Sn-1
LPFx
2↓x
(Sxn)
HPFx
2↓x
(Wxn)
LPFy
2↓y
Sn
HPFy
2↓y
Whn
LPFy
2↓y
Wvn
HPFy
2↓y
Wdn

FIG. 4

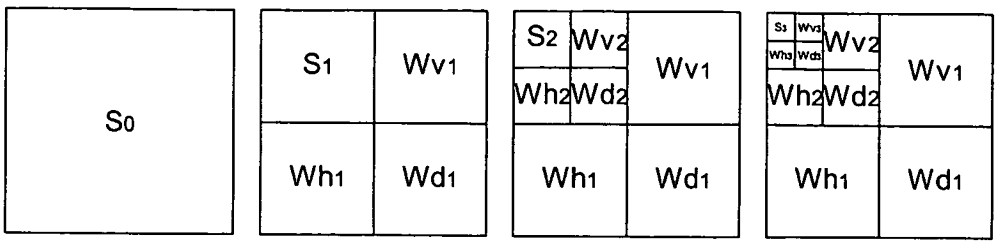
S0
S1
Wv1
Wh1
Wd1
S2
Wv2
Wh2
Wd2
S3
Wv3
Wh3
Wd3

FIG. 5

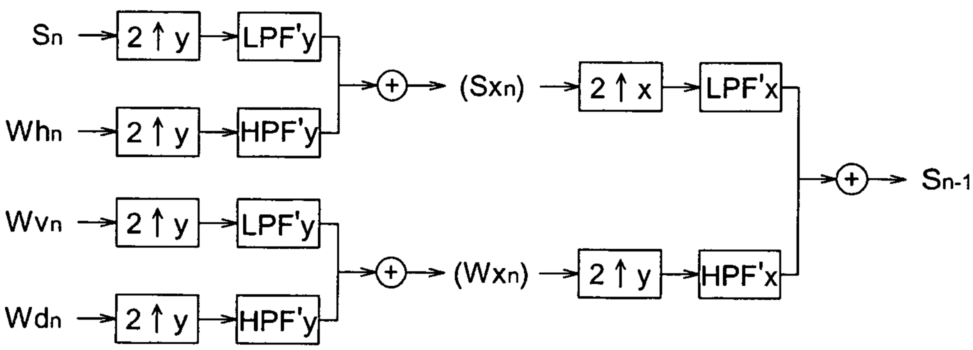
Sn
Whn
Wvn
Wdn
2↑y
LPF'y
HPF'y
(Sxn)
(Wxn)
2↑x
LPF'x
HPF'x
Sn-1

FIG. 6

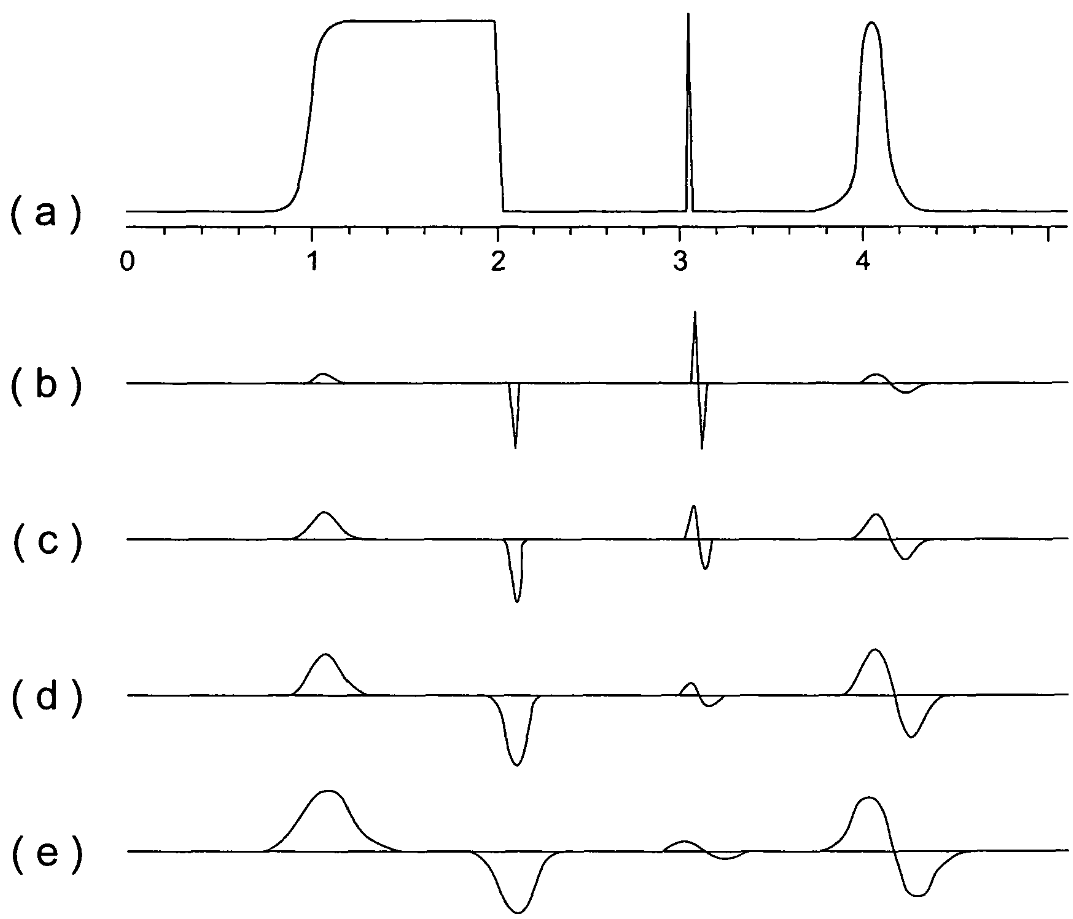

FIG. 7

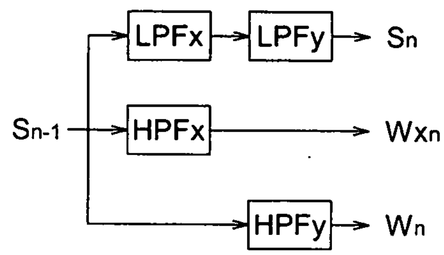
LPFx
LPFy
Sn
Sn-1
HPFx
Wxn
HPFy
Wn

FIG. 8

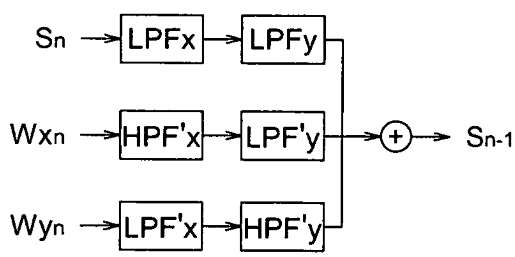
Sn
LPFx
LPFy
Wxn
HPF'x
LPF'y
+
Sn-1
Wyn
LPF'x
HPF'y

FIG. 9

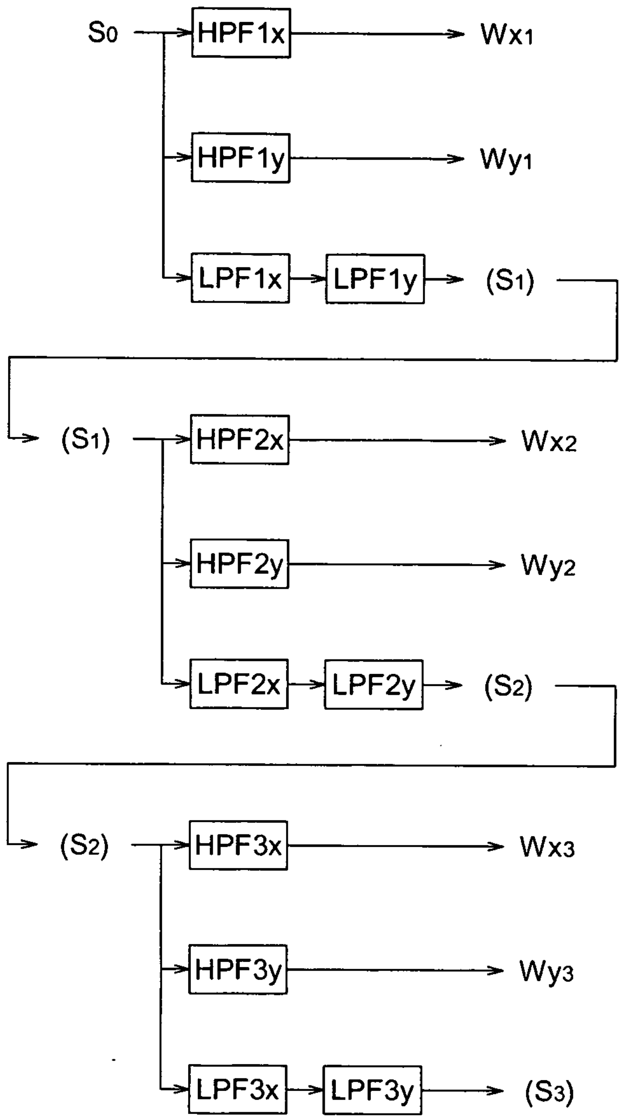
S0
HPF1x
Wx1
HPF1y
Wy1
LPF1x
LPF1y
(S1)
(S1)
HPF2x
Wx2
HPF2y
Wy2
LPF2x
LPF2y
(S2)
(S2)
HPF3x
Wx3
HPF3y
Wy3
LPF3x
LPF3y
(S3)

FIG. 10

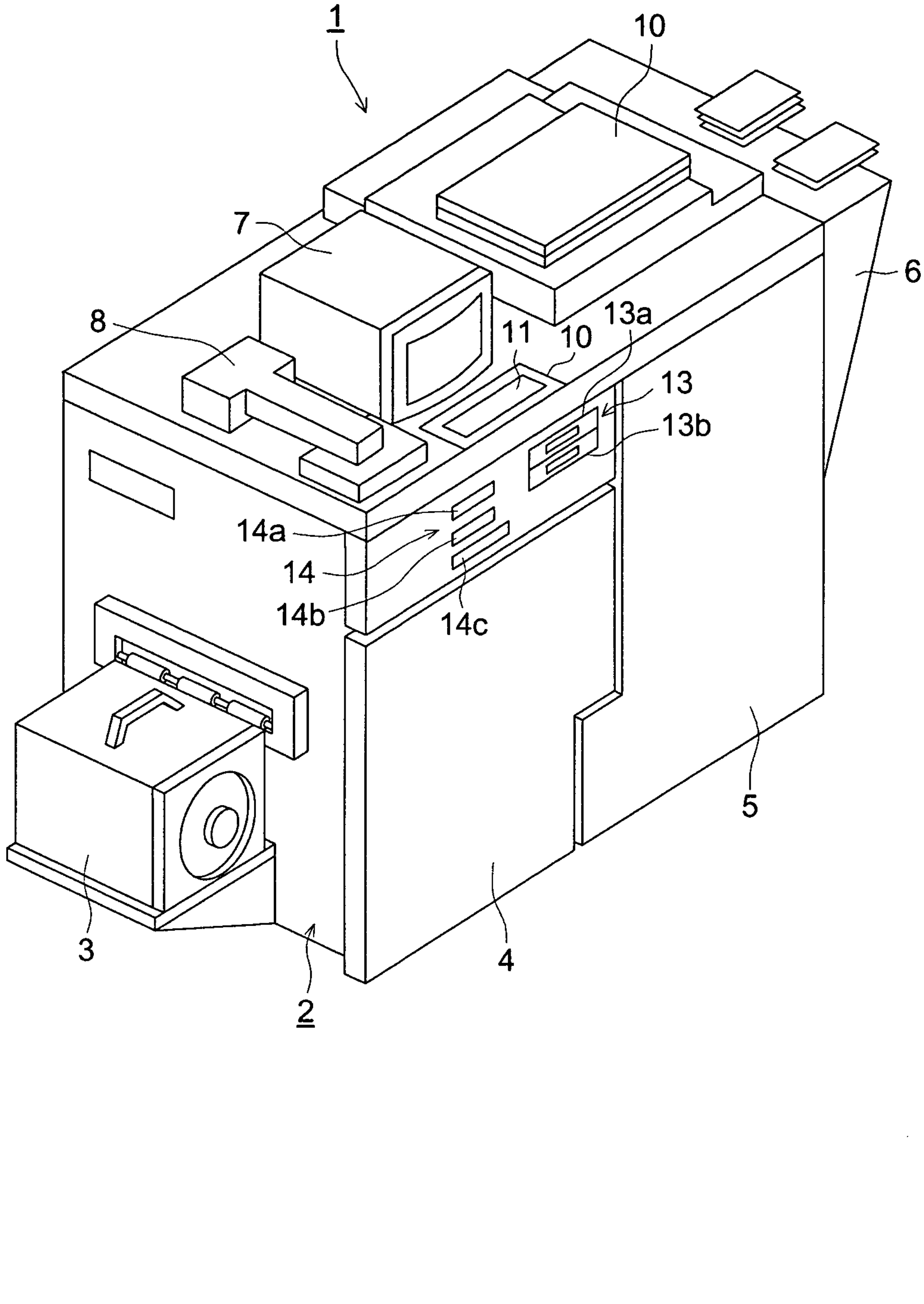

FIG. 11

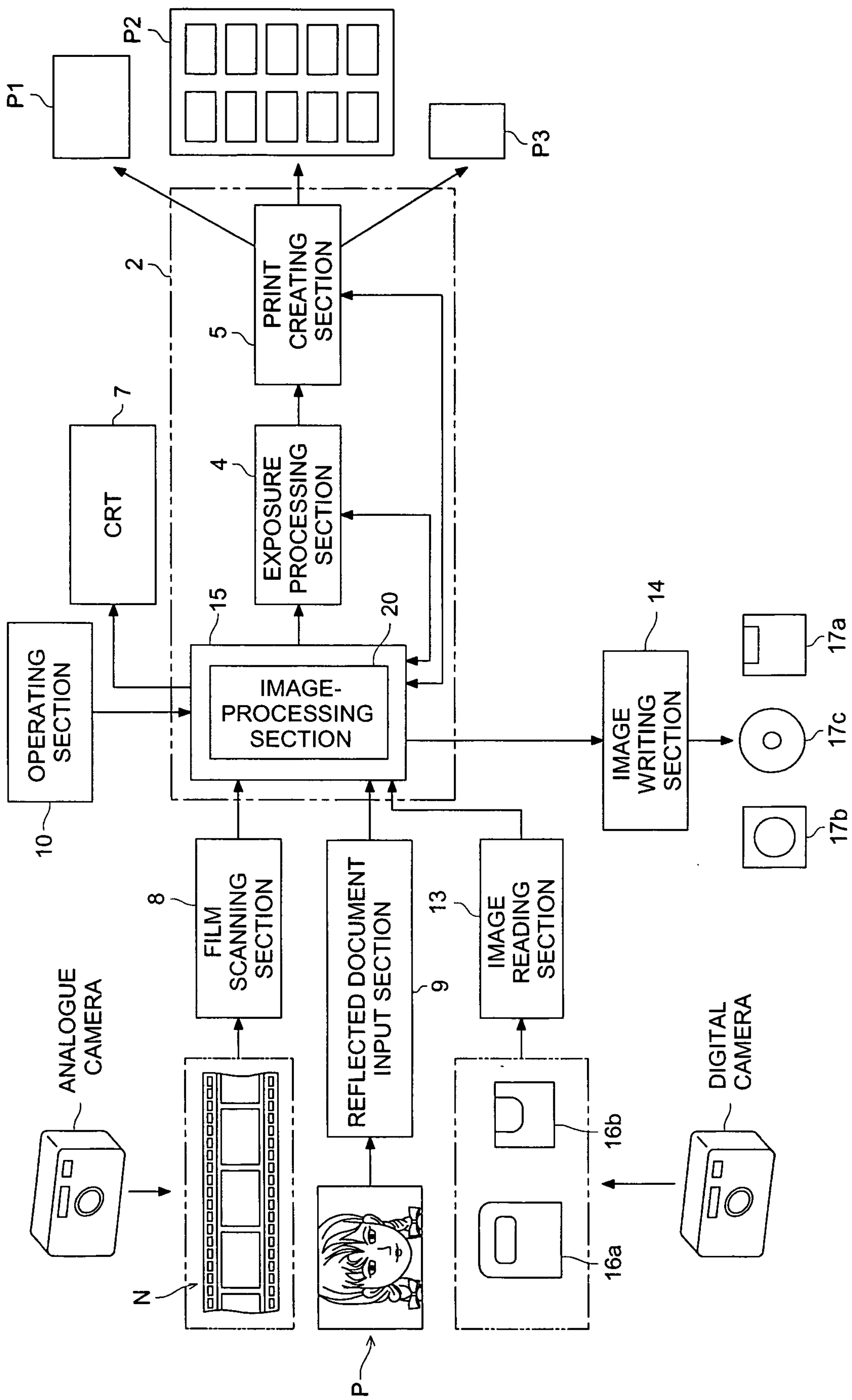
P1
P2
P3
2
5
PRINT CREATING SECTION
7
CRT
4
EXPOSURE PROCESSING SECTION
15
20
IMAGE-PROCESSING SECTION
OPERATING SECTION
10
14
IMAGE WRITING SECTION
17a
17c
17b
ANALOGUE CAMERA
8
FILM SCANNING SECTION
REFLECTED DOCUMENT INPUT SECTION
9
13
IMAGE READING SECTION
N
P
16a
16b
DIGITAL CAMERA

FIG. 12

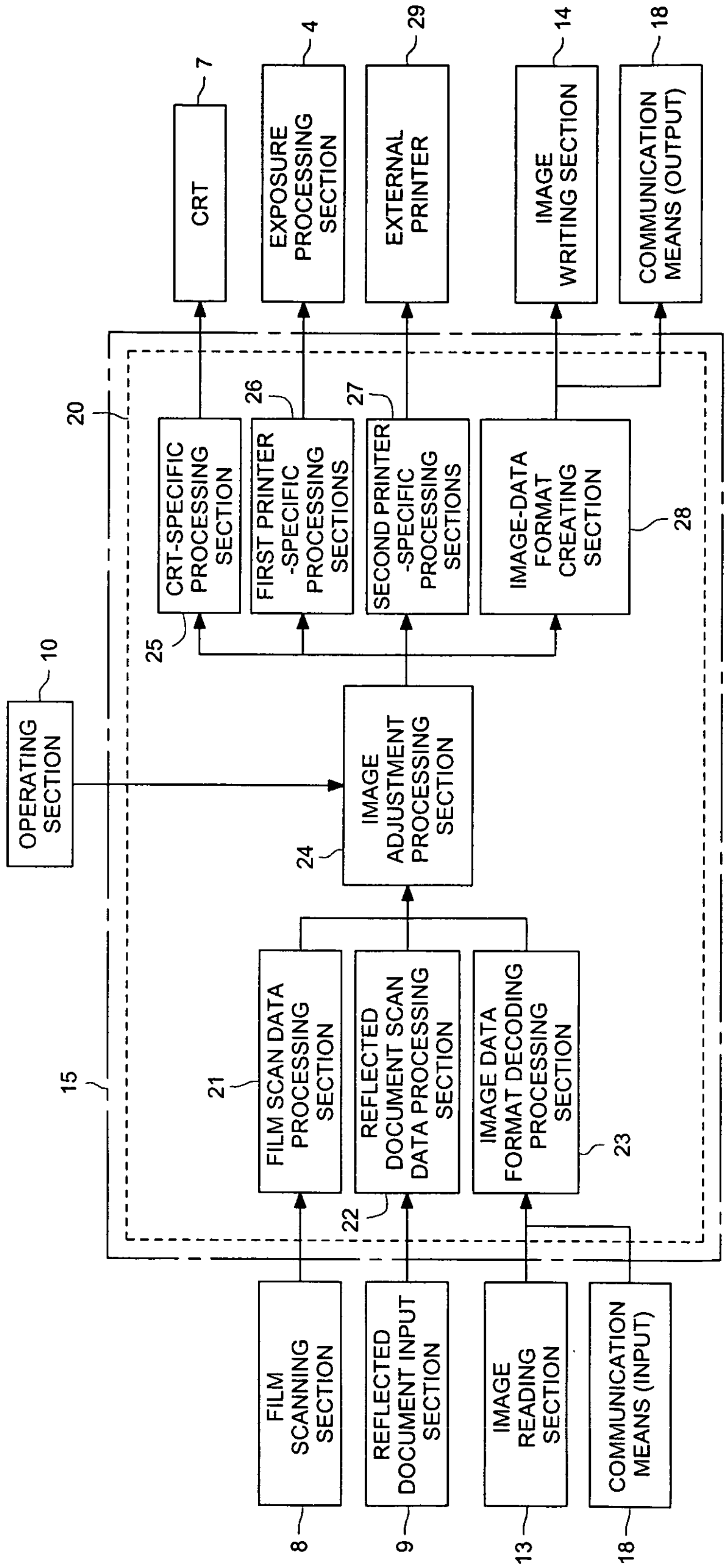
FILM SCANNING SECTION
REFLECTED DOCUMENT INPUT SECTION
IMAGE READING SECTION
COMMUNICATION MEANS (INPUT)
FILM SCAN DATA PROCESSING SECTION
REFLECTED DOCUMENT SCAN DATA PROCESSING SECTION
IMAGE DATA FORMAT DECODING PROCESSING SECTION
OPERATING SECTION
IMAGE ADJUSTMENT PROCESSING SECTION
CRT-SPECIFIC PROCESSING SECTION
FIRST PRINTER -SPECIFIC PROCESSING SECTIONS
SECOND PRINTER -SPECIFIC PROCESSING SECTIONS
IMAGE-DATA FORMAT CREATING SECTION
CRT
EXPOSURE PROCESSING SECTION
EXTERNAL PRINTER
IMAGE WRITING SECTION
COMMUNICATION MEANS (OUTPUT)
8
9
13
18
15
20
21
22
23
10
24
25
26
27
28
7
4
29
14
18

FIG. 13

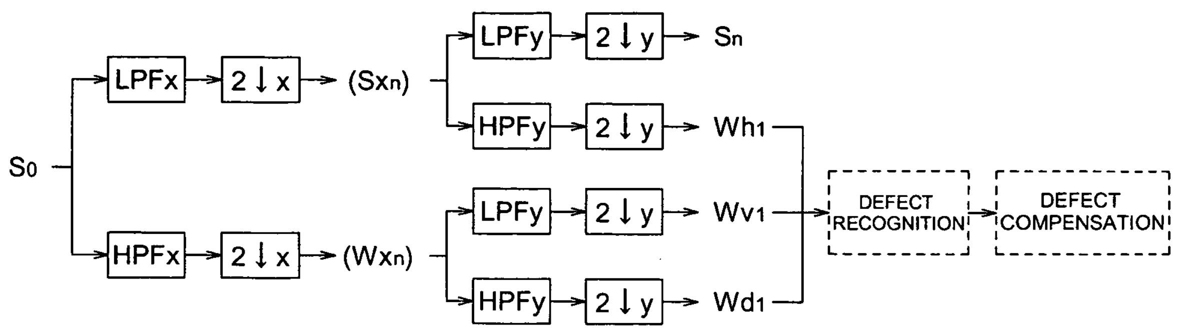
LPFx
2↓x
(Sxn)
HPFx
2↓x
(Wxn)
S0
LPFy
2↓y
Sn
HPFy
2↓y
Wh1
LPFy
2↓y
Wv1
HPFy
2↓y
Wd1
DEFECT RECOGNITION
DEFECT COMPENSATION

FIG. 14

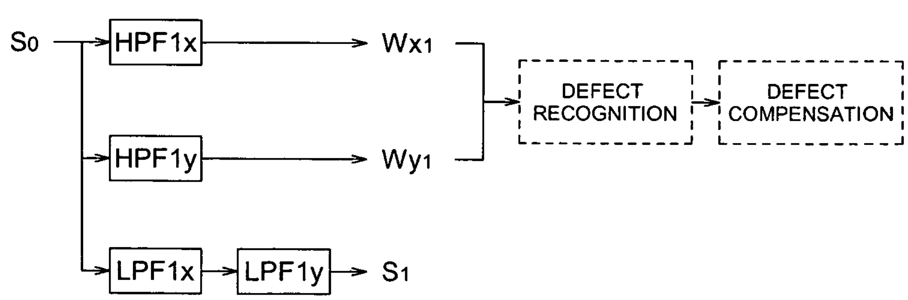
S0
HPF1x
Wx1
HPF1y
Wy1
LPF1x
LPF1y
S1
DEFECT RECOGNITION
DEFECT COMPENSATION

FIG. 15

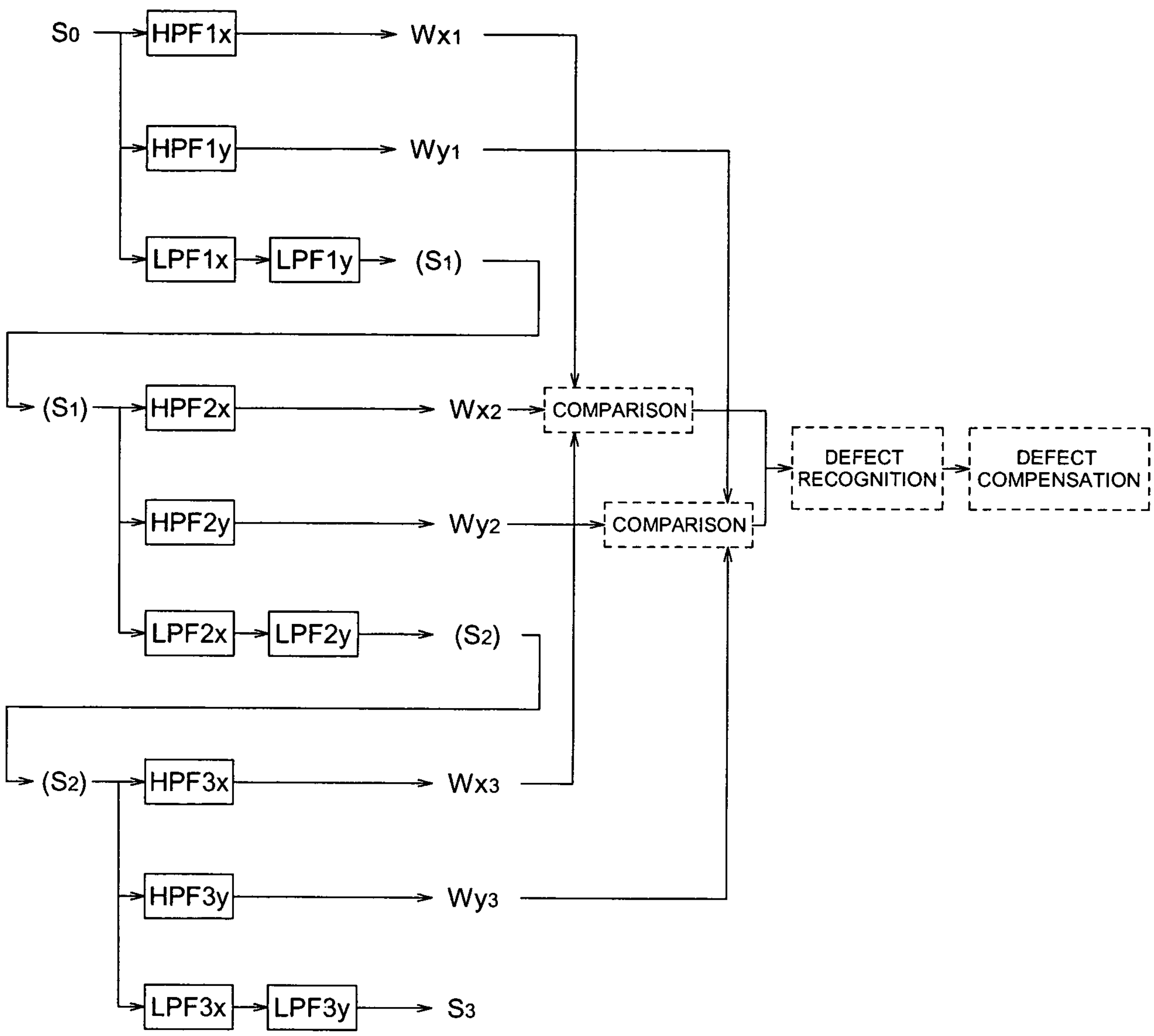
S0
HPF1x
Wx1
HPF1y
Wy1
LPF1x
LPF1y
(S1)
(S1)
HPF2x
Wx2
COMPARISON
HPF2y
Wy2
COMPARISON
LPF2x
LPF2y
(S2)
DEFECT RECOGNITION
DEFECT COMPENSATION
(S2)
HPF3x
Wx3
HPF3y
Wy3
LPF3x
LPF3y
S3